# EUROPEAN PATENT SPECIFICATION

(11) **EP 1 920 950 B1**
(45) Date of publication and mention of the grant of the patent: **08.07.2009**
(21) Application number: 07120383.0
(22) Date of filing: 09.11.2007
(51) Int. Cl.: B60C 11/04

(54) **Pneumatic tire**
Luftreifen
Pneumatique

(30) Priority: 10.11.2006 US 595680
(43) Date of publication of application: 14.05.2008
(73) Proprietor: The Goodyear Tire & Rubber Company, Akron, OH 44316-0001 (US)
(72) Inventor: Landers, Samual Patrick, North Canton, OH 44685 (US)
(74) Representative: Kutsch, Bernd

(56) References cited:
- EP-A- 0 688 686
- EP-A- 0 778 163
- EP-A- 1 215 055
- JP-A- 2001 206 017
- JP-A- 2002 283 812
- US-A- 4 641 695
- US-A1- 2006 185 776

## Description

### Field of the Invention

The present invention is directed to a pneumatic tire. More specifically, the present invention is directed to a pneumatic tire having a tire tread with a circumferential groove have a long length repeating pattern.

### Background of the Invention

In a conventional pneumatic tire, particularly a high-performance tire, the tread pattern is generally formed by combining circumferential grooves extending along the circumferential direction of the tire with a plurality of grooves inclined relative to the circumferential direction. The combination of grooves forms a plurality of tread blocks along the radially outer surface of tire. If the inclined grooves do not extend completely between circumferential grooves, ribs are generated in the tire tread.

Rib tires with straight circumferential grooves are generally known to be quieter and have better hydroplaning resistance than tires with grooves that interlock. However, tires with substantially straight grooves are susceptible to groove wander, i.e. tracking on road grooves, and have poorer snow cleaning capability.

Document EP-A-0 778 163 discloses the features of the preamble of claim 1.

### Summary of the Invention

The present invention is directed to a pneumatic tire according to claim 1.

The tire tread is provided with at least one circumferentially extending groove that has a low amplitude, low frequency pattern about the tire circumference. Due to the groove configuration, the resulting tread elements maintain most of its straight groove noise and hydroplaning advantages while minimizing groove wander tendencies and providing some snow clearing capability.

In accordance with other aspects of the invention, the repeating segment circumferentially extending groove may be symmetrically or asymmetrically located in the tread. There may be only one repeating segment circumferentially extending groove in the tread or multiple repeating segment circumferentially extending grooves in the tread.

In accordance with another aspect of the invention, the circumferentially extending groove preferably has at least six but not more than sixteen repeating segments, creating a pattern that repeats preferably three to eight times about the circumference of the tire. Thus, achieving a low frequency meandering pattern about the tire.

In accordance with another preferred aspect of the invention, the amplitude of the meandering pattern is also limited. For each repeating segment of the circumferential groove the lateral extent WA is in the range of 5 to 40% of the circumferential segment length LS. Preferably, the lateral extent WA is in the range of 5 to 25% of the circumferential segment length LS.

In accordance with another aspect of the invention, the low amplitude repeating pattern of the circumferential groove is either a sinusoidal or zig-zag pattern.

### Brief Description of the Drawings

The invention will be described by way of example and with reference to the accompanying drawings in which:
FIG. 1 is a pneumatic tire having a tread with a low amplitude, low frequency meandering circumferential groove;
FIG. 2 is an exploded view of the tread of FIG. 1; and
FIGS. 3 - 5 are alternative embodiments of the tire tread.

### Detailed Description of the Invention

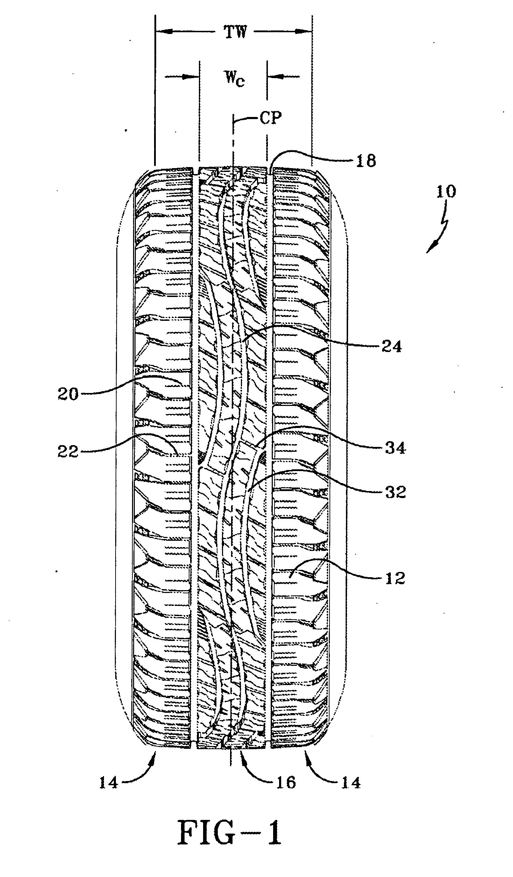

A tire 10 is illustrated in FIG. 1. On the radially outermost surface of the tire 10 is a tread 12. The tread 12 is divided into three regions: two opposing shoulder regions 14 and a central region 16. The regions 14, 16 are divided by continuous circumferentially extending, preferably straight grooves 18. The central region 16 has a width Wc in the range of 30 to 70% of the tread width TW, and by definition is centrally located in the tread 12. The shoulder regions 14 are located on opposing sides of the central tread region 16. In the shoulder regions 14 are a series of repeating tread elements, illustrated as tread blocks 20 separated by lateral grooves 22.

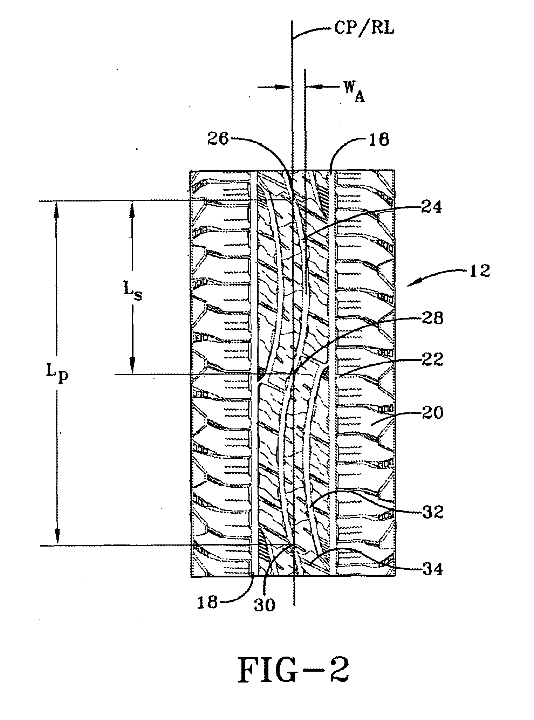

In the central tread region 16 is at least one non-straight continuous circumferentially extending groove 24. The groove 24 has a lateral component to it, creating a lateral extent WA. To create the continuous groove, and prevent the groove from "walking" across the tread, for each groove portion that shifts in one lateral direction, there is a portion of the groove that shifts in the opposite lateral direction. Each portion may be considered a repeating groove segment, wherein an adjacent pair of segments is a repeating groove pattern having a beginning point, a mid-point and an end-point. In the groove 24 of FIGS. 1 and 2, the repeating pattern is a sinusoidal curve, having a length L_{P}, with the beginning, mid, and end points 26, 28, 30. The curve has two circumferentially displaced, mirror image groove segments of length L_{S}; with each groove segment having a lateral extent W_{A} from the center plane CP.

The length LS is measured parallel to a reference line RL; said reference line RL is parallel to the center plane CP and connects the beginning, mid, and end points 26, 28, 30. For the tire 10 of FIGS. 1 and 2, the reference line RL is coincident with the tread center plane CP and the groove 24 repeatedly crosses the center plane CP. The segment length Lₛ of each groove segment is at least 1/16, or 6.25%, of the circumferential length of the tire tread 12. The preferred maximum segment length LS is 1/6, or about 16% of the circumferential length of the tire tread 12. This results in anywhere from 3 to 8 repeating sinusoidal curves about the circumference of the tire 10.

Each groove segment has an lateral extent WA, as measured from the reference line RL to the center of the groove 24. The lateral extent WA is at least equal to 5% of the tread width TW. The lateral extent WA of each groove segment is also in the range of 5 to 40 % of the circumferential segment length LS. Preferably, the lateral extent WA is in the range of 5 to 25% of the circumferential segment length LS.

Also within the central tread region 16 are a plurality of short length circumferentially extending grooves 32. The short length grooves 32 have a configuration that mimics or is substantially similar to the laterally adjacent portion of the continuous circumferential groove 24. The short length grooves 32 are located between circumferential grooves 18 that delineate the central tread region 16 and the continuous circumferential groove 24 in the central tread region. The short length grooves 32 assist in forming smaller tread elements than would otherwise be present in the tread absent the presence of such grooves 32. This assists in both the noise and wet driving characteristics of the tire 10.

To further divide the long rib-like tread elements on either side of the circumferential groove 24, a plurality of lateral grooves 34 are provided. The illustrated lateral grooves 34 initiate at both circumferential grooves 18 and a majority of the lateral grooves 34 appear to cross the at least one circumferential groove 24 or 32 in the central tread region 16.

The segment lengths LS in FIG. 2 are illustrated as having the same lengths. To prevent generation of a repetitive harmonic from the groove 24, the segment lengths LS may be slightly varied around the circumference of the tire. Another method to reduce noise in the tire tread is to vary the spacing of the lateral grooves located in the extending tread elements on each side of the groove 24.

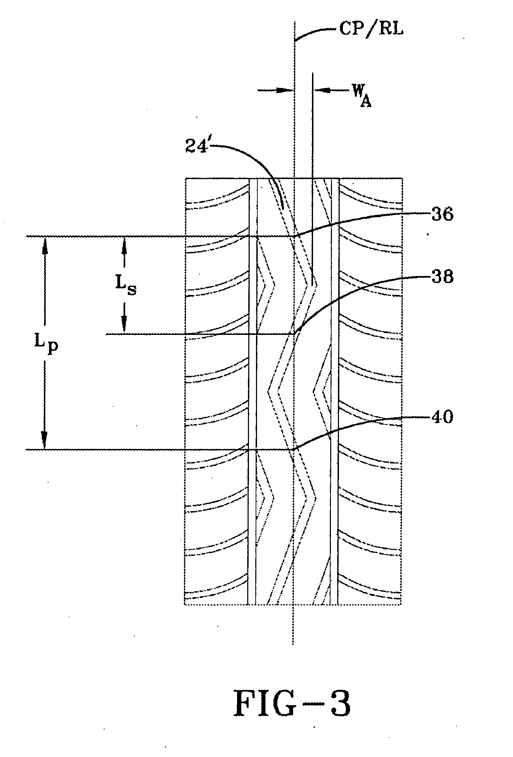

While the groove 24 of FIG. 1 has a repeating sinusoidal pattern with each groove segment being curved, the circumferential groove may have zig-zag configuration, see FIG 3. The groove pattern length LP of the zig-zag groove 24' is still measured between a beginning point 36 and an end point 40 of the groove pattern wherein the groove is coincident with the pattern reference line RL at the beginning point 36, a mid-point 38, and the end point 40. The remaining features in the tread of FIG. 3 are merely for illustrative purposes and may be selected to achieve the desired tire characteristics.

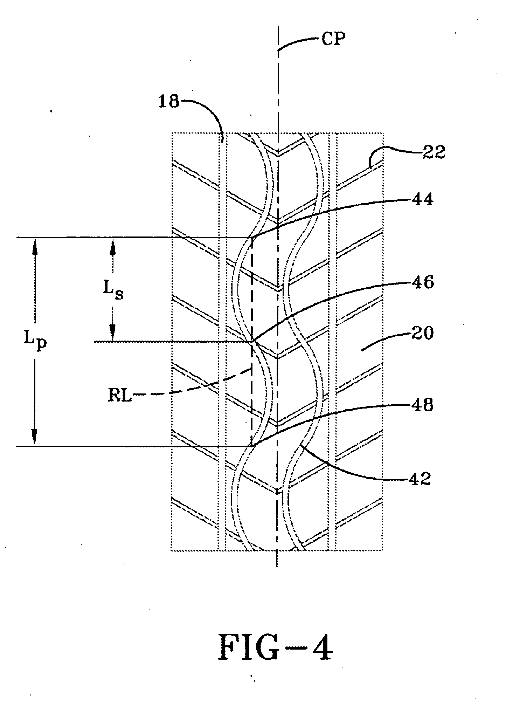

FIG. 4 illustrates another embodiment of the tread containing the long repeating pattern groove. The tread central portion has two sinusoidal grooves 42 located therein. The reference line RL is parallel to the center plane CP and passes through a beginning point 44, mid-point 46, and end point 48 of the repeating pattern.

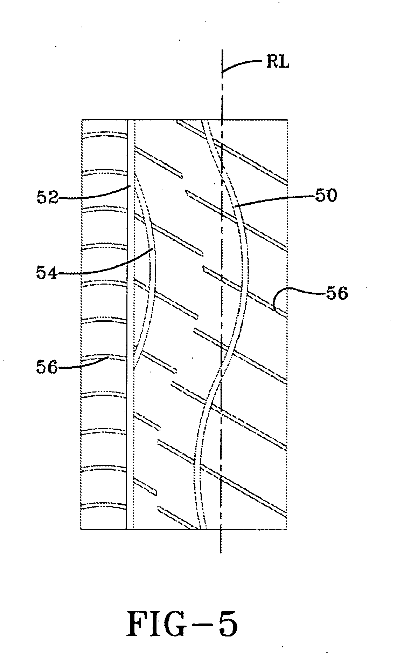

FIG. 5 illustrates another embodiment of the tread having the long repeating pattern groove. The tread has a sinusoidal groove 50 located in only one side of the tread. In the opposing tread half is a straight circumferentially extending groove 52. A plurality of short length circumferential grooves 54 and lateral grooves 56 assist in forming tread elements. In this embodiment, the sinusoidal groove 50 assists in delineating the central tread region 16 from the shoulder regions 14.

It is within the scope of this invention to have the low amplitude, low frequency meandering groove 24, 24', 42, 50 at any location within the tread pattern. For all of the embodiments illustrated and those encompassed by the scope of the present disclosure and appended claims herein, the resulting tire, due to the presence of the low amplitude, low frequency meandering circumferential groove, maintain most of its straight groove noise and hydroplaning advantages, in comparison to a straight rib tire, while minimizing groove wander tendencies and providing some snow clearing capability.

## Claims

1. A pneumatic tire, the tire having a tread (12), a radially outermost surface of the tread defining a circumferential length of the tire, the tread comprising a non- straight circumferentially extending groove (24), the non-straight circumferentially extending groove (24) having repeating segments, the repeating segments having an extent (WA) in the lateral direction of the tread (12), wherein each directly adjacent repeating segment extends in opposite lateral directions,
**characterised in that** the circumferential length (LS) of each repeating segment is at least 6.25% of the tire circumferential length.

2. The tire of claim 1 wherein the circumferentially extending groove has at least six but not more than sixteen repeating segments.

3. The tire of claim 1 or 2 wherein, for each repeating segment of the non-straight circumferential groove (24), the lateral extent (WA) is in the range of 5 to 40% of the circumferential segment length (LS).

4. The tire of at least one of the previous claims wherein, for each repeating segment of the non-straight circumferential groove (24), the lateral extent (WA) is in the range of 5 to 25% of the circumferential segment length (LS).

5. The tire of at least one of the previous claims wherein the circumferentially extending groove (24) is located in a central region (16) of the tire tread (12) and/or claims wherein the circumferentially extending groove (24) repeatedly crosses the center plane (CP) of the tire tread (12).

6. The tire of at least one of the previous claims wherein laterally adjacent to each repeating segment of the circumferential groove (24) is a short length circumferentially extending groove (32) having a configuration substantially similar to the adjacent repeating segment.

7. The tire of at least one of the previous claims wherein the tread (12) is further provided with a pair of preferably straight circumferential grooves (18), one groove (18) on each lateral side of the repeating segment non-straight circumferentially extending groove (24).

8. The tire of at least one of the previous claims wherein the non-straight circumferential groove (24) has either a sinusoidal or zig-zag configuration.

9. The tire of at least one of the previous claims wherein the segments in the non-straight circumferentially extending groove have different circumferential lengths (LS).

10. The tire of at least one of the previous claims wherein the tread (12) has two non-straight repeating segment circumferentially extending grooves and/or wherein the non-straight circumferentially extending groove (24) is located in only one half of the tread (12).

## Patentansprüche

1. Luftreifen, wobei der Reifen eine Lauffläche (12) aufweist, eine radial äußerste Fläche der Lauffläche eine Umfangslänge des Reifens definiert, die Lauffläche eine nicht gerade, sich in Umfangsrichtung erstreckende Rille (24) umfasst, die nicht gerade, sich in Umfangsrichtung erstreckende Rille (24) sich wiederholende Abschnitte aufweist, die sich wiederholenden Abschnitte eine Ausdehnung (WA) in der seitlichen Richtung der Lauffläche (12) haben, wobei jeder direkt benachbarte, sich wiederholende Abschnitt sich in entgegengesetzten seitlichen Richtungen erstreckt, **dadurch gekennzeichnet, dass** die Umfangslänge (LS) jedes sich wiederholenden Abschnitts mindestens 6,25% der Reifenumfangslänge beträgt.

2. Luftreifen nach Anspruch 1, wobei die sich in Umfangsrichtung erstreckende Rille mindestens sechs, jedoch nicht mehr als sechzehn sich wiederholende Abschnitte aufweist.

3. Luftreifen nach Anspruch 1 oder 2, wobei für jeden sich wiederholenden Abschnitt der nicht geraden, umfangsgerichteten Rille (24) die seitliche Ausdehnung (WA) im Bereich von 5 bis 40% der umfangsgerichteten Abschnittslänge (LS) liegt.

4. Reifen nach mindestens einem der vorgenannten Ansprüche, wobei für jeden sich wiederholenden Abschnitt der nicht geraden, umfangsgerichteten Rille (24) die seitliche Ausdehnung (WA) im Bereich von 5 bis 25% der umfangsgerichteten Abschnittslänge (LS) liegt.

5. Reifen nach mindestens einem der vorgenannten Ansprüche, wobei die sich in Umfangsrichtung erstreckende Rille (24) sich in einem Mittenbereich (16) der Reifenlauffläche (12) befindet, und/oder Ansprüche, wobei die sich in Umfangsrichtung erstreckende Rille (24) wiederholt die Mittelebene (CP) der Reifenlauffläche (12) kreuzt.

6. Reifen nach mindestens einem der vorgenannten Ansprüche, wobei sich seitlich benachbart zu jedem sich wiederholenden Abschnitt der umfangsgerichteten Rille (24) eine sich in Umfangsrichtung erstreckende Rille (32) von kurzer Länge befindet, die eine Konfiguration im Wesentlichen gleichartig der des benachbarten, sich wiederholenden Abschnitts aufweist.

7. Reifen nach mindestens einem der vorgenannten Ansprüche, wobei die Lauffläche (12) weiter mit einem Paar bevorzugt gerader umfangsgerichteter Rillen (18), eine Rille (18) an jeder lateralen Seite der nicht geraden, sich in Umfangsrichtung erstreckenden Rille (24) mit sich wiederholenden Abschnitten, versehen ist.

8. Reifen nach mindestens einem der vorgenannten Ansprüche, wobei die nicht gerade, umfangsgerichtete Rille (24) entweder eine sinusförmige oder Zickzack-Konfiguration hat.

9. Reifen nach mindestens einem der vorgenannten Ansprüche, wobei die Abschnitte in der nicht geraden, sich in Umfangsrichtung erstreckenden Rille verschiedene umfangsgerichtete Längen (LS) aufweisen.

10. Reifen nach mindestens einem der vorgenannten Ansprüche, wobei die Lauffläche (12) zwei nicht gerade, sich in Umfangsrichtung erstreckende Rillen mit sich wiederholenden Abschnitten aufweist und/oder wobei die nicht gerade, sich in Umfangsrichtung erstreckende Rille (24) sich nur in einer Hälfte der Lauffläche (24) befindet.

## Revendications

1. Bandage pneumatique, le bandage pneumatique possédant une bande de roulement (12), une surface de la bande de roulement, le plus à l'extérieur en direction radiale, définissant une longueur circonférentielle du bandage pneumatique, la bande de roulement comprenant une rainure non droite (24) s'étendant en direction circonférentielle, la rainure non droite (24) s'étendant en direction circonférentielle possédant des segments répétitifs, les segments répétitifs possédant une étendue (WA) dans la direction latérale de la bande de roulement (12), chaque segment répétitif directement adjacent s'étendant dans des directions latérales opposées, **caractérisé en ce que** la longueur circonférentielle (LS) de chaque segment répétitif représente au moins 6,25 % de la longueur circonférentielle du bandage pneumatique.

2. Bandage pneumatique selon la revendication 1, dans lequel la rainure s'étendant en direction circonférentielle possède au moins six segments répétitifs, mais pas plus de seize.

3. Bandage pneumatique selon la revendication 1 ou 2, dans lequel pour chaque segment répétitif de la rainure circonférentielle non droite (24), l'étendue latérale (WA) se situe dans la plage de 5 à 40 % de la longueur (LS) du segment circonférentiel.

4. Bandage pneumatique selon au moins une des revendications précédentes, dans lequel, pour chaque segment répétitif de la rainure circonférentielle non droite (24), l'étendue latérale (WA) se situe dans la plage de 5 à 25 % de la longueur (LS) du segment circonférentiel.

5. Bandage pneumatique selon au moins une des revendications précédentes, dans lequel la rainure (24) s'étendant en direction circonférentielle est située dans une région centrale (16) de la bande de roulement (12) du bandage pneumatique et/ou dans lequel la rainure (24) s'étendant en direction circonférentielle traverse de manière répétée le plan central (CP) de la bande de roulement (12) du bandage pneumatique.

6. Bandage pneumatique selon au moins une des revendications précédentes, dans lequel, en position latéralement adjacente à chaque segment répétitif de la rainure circonférentielle (24), est disposée une rainure (32) de courte longueur s'étendant en direction circonférentielle, dont la configuration est essentiellement similaire à celle du segment répétitif adjacent.

7. Bandage pneumatique selon au moins une des revendications précédentes, dans lequel la bande de roulement (12) est en outre munie d'une paire de rainures circonférentielles (18) de préférence droites, une rainure (18) sur chaque côté latéral du segment répétitif de la rainure non droite (24) s'étendant en direction circonférentielle.

8. Bandage pneumatique selon au moins une des revendications précédentes, dans lequel la rainure circonférentielle non droite (24) possède une configuration soit sinusoïdale, soit en zigzag.

9. Bandage pneumatique selon au moins une des revendications précédentes, dans lequel les segments dans la rainure non droite s'étendant en direction circonférentielle possèdent des longueurs circonférentielles différentes (LS).

10. Bandage pneumatique selon au moins une des revendications précédentes, dans lequel la bande de roulement (12) possède deux rainures non droites à segments répétitifs, s'étendent en direction circonférentielle, la rainure non droite (24) s'étendant en direction circonférentielle étant située seulement sur la moitié de la bande de roulement (12).
